# EUROPEAN PATENT APPLICATION

(11) **EP 4 198 555 A1**
(43) Date of publication of application: **21.06.2023**
(21) Application number: 22212054.5
(22) Date of filing: 07.12.2022
(51) Int. Cl.: G01S 7/481, G01S 17/42, G01S 17/931, G01S 17/10

(54) **LIDAR APPARATUS, LIDAR DEVICE AND VEHICLE**

(30) Priority: 14.12.2021 CN 202111525765
(71) Applicant: Nio Technology (Anhui) Co., Ltd, Hefei City, Anhui 230601 (CN)
(72) Inventor: BAI, Jian, Hefei City, Anhui, 230601 (CN); ZHANG, Jianyong, Hefei City, Anhui, 230601 (CN); FANG, Ruifang, Hefei City, Anhui, 230601 (CN)
(74) Representative: Vossius & Partner Patentanwälte Rechtsanwälte mbB

(57) **Abstract**

The disclosure relates to a Lidar apparatus. The Lidar apparatus includes an area array light source, an emitting lens group, a receiving lens group, and an area array detector, where the area array light source is located in the front focal plane of the emitting lens group, and the area array detector is located in the back focal plane of the receiving lens group; a laser beam emitted from the area array light source is transmitted, through the emitting lens group, to an object to be detected and reflected by the object to be detected, and a reflected laser beam is transmitted to the area array detector through the receiving lens group; and a foveated optical system is used for each of the emitting lens group and the receiving lens group, and the image height of the foveated optical system is directly proportional to a tangent value of a field of view, such that angular resolutions of the Lidar apparatus are approximately distributed evenly. The disclosure further relates to a Lidar device and a vehicle. The technical solutions of the Lidar apparatus proposed by the disclosure may implement long-range solid-state Lidar detection with a large field of view and uneven angular resolutions.

## Description

### Technical Field

The disclosure relates to the field of sensors, and specifically to a Lidar apparatus, a Lidar device, and a vehicle.

### Background Art

With the development of autonomous driving technologies, automobile perception systems are constantly undergoing technological reformation and innovation in both forms and functions. As an indispensable sensor in an automobile vision system, Lidar have a continuously expanding application range and continuously increasing functions in the automobile industry. Common Lidar may be classified into mechanical Lidar and solid-state Lidar according to the scanning mode.

Mechanical Lidar use internal mechanical components to scan and locate a laser light source, which can implement a large-angle detection range. However, mechanical scanning components are highly difficult to assemble, such that it is difficult for them to pass high temperature and low temperature environmental tests, vibration experiments, and the like to meet automotive-grade requirements. As a result, there are challenges in applying mechanical Lidar in the field of vehicle assisted driving.

Solid-state Lidars have relatively simple structures and the components and parts used are all-solid-state mechanical devices. A solid-state Lidar mainly includes a flash Lidar, an optical phased array Lidar, and a linear frequency modulation continuous wave Lidar.

In recent years, with the productization of area array laser light sources and detector arrays, the solution of using flash Lidar has been adopted by more and more Lidar suppliers, and flash Lidar have begun to be put into production. The disclosure CN 108132464 A proposes a Lidar apparatus based on a solid-state area array. The Lidar apparatus is composed of an emitting module and a receiving module. The emitting module uses a single laser light source to emit laser light in sequence at a set time interval, and the receiving module uses an area array photodetector, and makes responses by controlling detectors at different positions, so as to implement a one-to-one correspondence between a light source and a detector pixel. The Lidar apparatus alleviates the problems of complex structure and numerous processes of mechanical Lidar to a certain extent. However, a detection angle implementable by the Lidar apparatus is limited because a single laser light source cannot implement a large field-of-view detection range. For example, in an embodiment described in CN 108132464 A, a horizontal field of view (HFOV) is 50°, and a vertical field of view (VFOV) is 25°.

The disclosure CN 208520989 U proposes a solid-state Lidar based on a micro-electro-mechanical systems (MEMS) device. The solid-state Lidar includes a laser light source, an emitting component, a MEMS device, and a receiving component. A specific working process of the solid-state Lidar is as follows: A laser light source is scanned by the MEMS after passing through the emitting component, and light obtained after reflection by a detection target is received by a photodetector after passing through the MEMS and the receiving component. For the Lidar, it is necessary to change the vibration frequency of the MEMS device in a specific field of view to implement scanning with uneven angular resolutions. As a result, the control is complex, and it is difficult to maintain high-precision control effects. In addition, due to performance degradation or even damage of the MEMS device under the condition of high-frequency vibration, it is difficult for Lidar products based on this technology to pass strict vibration tests to meet automotive-grade requirements.

The information disclosed above in the background art of the disclosure is merely intended to facilitate understanding of the general background of the disclosure and should not be taken as an acknowledgement or any form of suggestion that the information constitutes the prior art already known to those of ordinary skill in the art.

### Summary of the Disclosure

In order to solve or at least alleviate one or more of the above problems or other problems, the disclosure proposes the following technical solutions.

According to an aspect of the disclosure, a Lidar apparatus is provided. The Lidar sensor includes an area array light source, an emitting lens group, a receiving lens group, and an area array detector, where the area array light source is located in the front focal plane of the emitting lens group, and the area array detector is located in the back focal plane of the receiving lens group; a laser beam emitted from the area array light source is transmitted, through the emitting lens group, to an object to be detected and reflected by the object to be detected, and a reflected laser beam is transmitted to the area array detector through the receiving lens group; and a foveated system is used for each of the emitting lens group and the receiving lens group, and the image height of the foveated optical system is directly proportional to a tangent value of a field of view.

As an alternative or addition to the above solution, in the Lidar apparatus according to an embodiment the disclosure, an optical axis of the emitting lens group is parallel to an optical axis of the receiving lens group.

As an alternative or addition to the above solution, in the Lidar apparatus according to an embodiment the disclosure, the area array light source includes one or more of the following laser arrays: a vertical cavity surface emitting laser array, an edge emitting laser array, a solid-state laser array, and a semiconductor laser array.

As an alternative or addition to the above solution, in the Lidar apparatus according to an embodiment the disclosure, an operating waveband of the area array light source and a detection waveband of the area array detector are matched with each other.

As an alternative or addition to the above solution, in the Lidar apparatus according to an embodiment the disclosure, the area array light source is an infrared light source array, and the area array detector is an infrared detector array.

As an alternative or addition to the above solution, in the Lidar apparatus according to an embodiment the disclosure, the area array light source and the area array detector cooperate with each other in a time interlaced lighting mode.

As an alternative or addition to the above solution, in the Lidar apparatus according to an embodiment the disclosure, the emitting lens group includes a refractor, a reflector, or a combination thereof; and/or the receiving lens group includes a refractor, a reflector, or a combination thereof.

As an alternative or addition to the above solution, in the Lidar apparatus according to an embodiment the disclosure, an infrared antireflective film is arranged on the front surface and/or the rear surface of the refractor; and/or an infrared high-reflective film is arranged on the front surface of the reflector.

According to another aspect of the disclosure, a Lidar device is provided. The Lidar device includes: the Lidar apparatus according to the disclosure; and a computing apparatus configured to calculate, based on a difference between a time at which the area array light source emits the laser beam and a time at which the area array detector receives the laser beam, a distance between the Lidar apparatus and the object to be detected.

According to still another aspect of the disclosure, a vehicle is provided and has the Lidar apparatus according to the disclosure.

The technical solutions of the Lidar apparatus proposed by the disclosure may implement long-range solid-state Lidar detection with a large field of view and uneven angular resolutions, and has higher detection precision within a small field-of-view range. The Lidar apparatus has a simple structure and low integration and assembly difficulty, and it is easy for the Lidar apparatus to pass automotive-grade tests.

### Brief Description of the Drawings

The above and other objectives and advantages of the disclosure will be clearer and more thorough from the following detailed description in conjunction with the accompanying drawings.
FIG. 1 is a schematic diagram of a Lidar apparatus 100 according to an embodiment of the disclosure;
FIG. 2 is a schematic diagram of a light path of a foveated optical system in a Lidar apparatus 100 according to an embodiment of the disclosure;
FIG. 3 is a distribution diagram of angular resolutions of a Lidar apparatus 100 according to an embodiment of the disclosure; and
FIG. 4 is a further simulated distribution diagram of angular resolutions of a Lidar apparatus 100 within an entire field-of-view range; and
FIG. 5 is a schematic block diagram of a Lidar device 500 according to an embodiment of the disclosure.

### Detailed Description of Embodiments

It should be noted that, unless otherwise specified, the terms "including/comprising", "having", and similar expressions in the specification are intended to indicate a non-exclusive inclusion. In addition, the term "vehicle" or other similar terms in the specification are intended to indicate any suitable vehicle having a drive system including at least a battery, a power conversion device, and a drive motor, for example, a hybrid vehicle, an electric vehicle, a plug-in hybrid electric vehicle, and the like. A hybrid vehicle is a vehicle with two or more power sources, such as a vehicle powered by a gasoline engine and an electric motor.

Various exemplary embodiments according to the disclosure will be described below in detail with reference to the accompanying drawings.

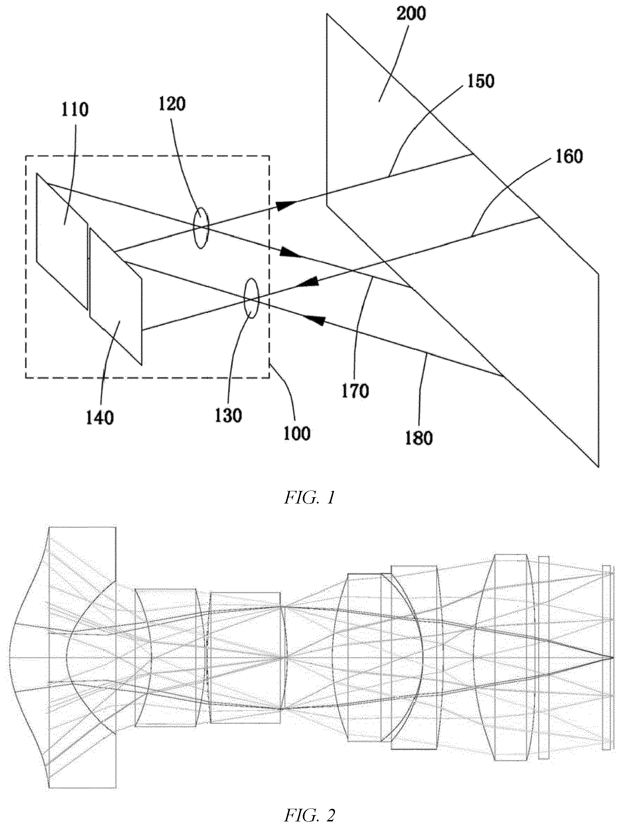

FIG. 1 is a schematic diagram of a Lidar apparatus 100 according to an embodiment of the disclosure. Referring to FIG. 1, the Lidar apparatus 100 includes an area array light source 110, an emitting lens group 120, a receiving lens group 130, and an area array detector 140. The area array light source 110 is located in the front focal plane of the emitting lens group 120, and the area array detector 140 is located in the back focal plane of the receiving lens group 130. Laser beams (for example, laser beams 150 and 170) emitted from the area array light source 110 are transmitted, through the emitting lens group 120, to an object 200 to be detected, the laser beams (for example, the laser beams 150 and 170) are reflected by the surface of the object 200 to be detected, and reflected laser beams (for example, laser beams 160 and 180) are transmitted, through the receiving lens group 130, to the area array detector 140 so as to be detected by the area array detector 140. An array light source is used, so that the Lidar apparatus 100 can implement long-range detection by increasing the laser power.

In the embodiment shown in FIG. 1, a foveated optical system is used for each of the emitting lens group 120 and the receiving lens group 130. The image height of the foveated optical system is directly proportional to a tangent value of a field of view. This enables angular resolutions of the Lidar apparatus 100 to be distributed unevenly. The Lidar apparatus 100 can achieve a higher angular resolution in the directly front direction (for example, in the direction with a field of view of 0 degrees) than in the front left/right direction (for example, in the direction with a field of view of 75°), to achieve a higher-precision detection effect in the directly front direction.

In the context of the disclosure, the field of view being 0 degrees is intended to represent a field of view direction substantially perpendicular to the plane where the area array light source is located.

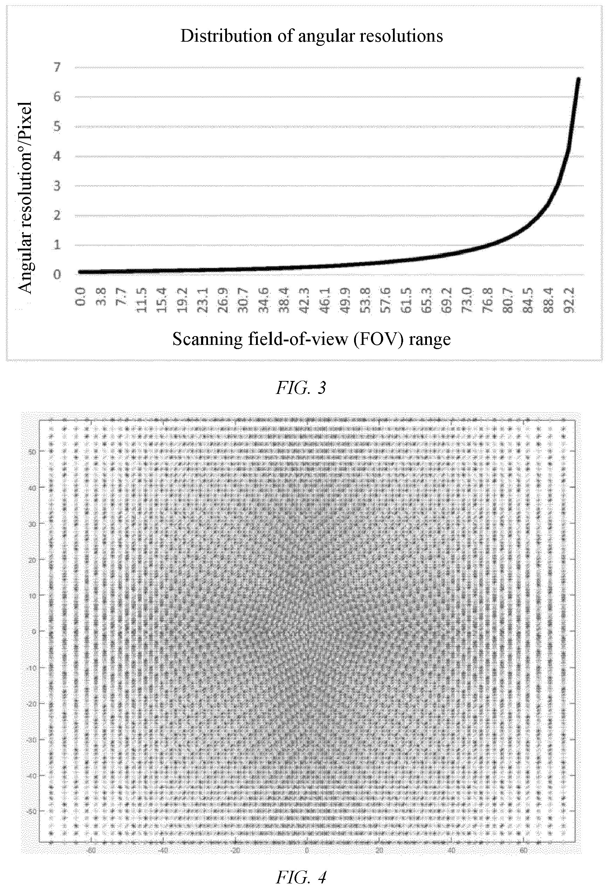

FIG. 2 is a schematic diagram of a light path in a foveated optical system used in each of an emitting lens group 120 and a receiving lens group 130. FIG. 3 is a distribution diagram of angular resolutions of a Lidar apparatus 100 using a foveated optical system. It can be seen from FIG. 3 that, within the field-of-view range of 0 degrees to +75 degrees, as field-of-view values corresponding to adjacent angular resolutions gradually increase, the angular resolutions gradually decrease, that is, the angular resolutions are distributed unevenly between 0 degrees and +75 degrees, and higher-precision detection can be implemented in the direction of 0 degrees. Those skilled in the art easily foresee that, within a symmetrical field-of-view range (for example, a range of 0 degrees to -75 degrees), the angular resolutions can also be distributed unevenly in a similar manner. Therefore, the angular resolutions of the Lidar apparatus 100 can be unevenly distributed within a range of 150 degrees in the full field of view, and higher detection precision is implemented in the direction of a small field of view than in the direction of a large field of view. Therefore, the Lidar apparatus 100 implements a long-range solid-state Lidar detection solution with a large field of view and uneven angular resolutions.

FIG. 4 is a further simulated distribution diagram of angular resolutions of a Lidar apparatus 100 within an entire field-of-view range. It can also be clearly seen from FIG. 4 that the Lidar apparatus 100 has unevenly distributed angular resolutions within the entire field-of-view range. In the forward direction, the Lidar apparatus 100 has a maximum angular resolution. From the front to the left front, the right front, the upper front, and the lower front, the angular resolutions gradually decrease.

Components and parts of the Lidar apparatus 100 are all-solid-state devices, and the entire apparatus has less components and parts, a simple structure, and low integration and assembly difficulty. In addition, the above Lidar apparatus 100 can implement scanning within a large field-of-view range by utilizing cooperation between the emitting lens group and the receiving lens group. For example, according to the distribution diagram of the angular resolutions shown in FIG. 3, the Lidar apparatus 100 at least can implement scanning within the field-of-view range of 0 degrees to 150 degrees. In addition, the foveated optical system is used, so that a characteristic that the image height is directly proportional to the tangent value of the field of view is implemented, and the above Lidar apparatus 100 implements uneven distribution of angular resolutions in a large field of view. The Lidar apparatus 100 is more focused on an object appearing at a position closer to the directly front direction than on an object in the edge field of view.

In the embodiment shown in FIG. 1, the receiving lens group 130 is arranged at a position where the receiving lens group is perpendicular to laser beams (for example, laser beams 150 and 170) emitted from the area array light source 110 and at a specific distance from the emitting lens group 120, such that an optical axis of the emitting lens group 120 is parallel to an optical axis of the receiving lens group 130. Therefore, it is ensured that the laser beams (for example, the laser beams 150 and 170) emitted from the area array light source 110 can be reflected by the surface of the object 200 to be detected, and reflected laser beams (for example, laser beams 160 and 180) can be received by the area array detector 140 through the receiving lens group 130.

In an embodiment, an operating waveband of the area array light source 110 and a detection waveband of the area array detector 140 are matched with each other, such that the laser beams emitted from the area array light source 110 can be detected by the area array detector 140. For example, the area array light source 110 may be an infrared light source array, and correspondingly, the area array detector 140 may be an infrared detector array. For example, the operating waveband of the area array light source 110 may include 850 nm, 905 nm, 940 nm, 1550 nm, or another infrared waveband, and correspondingly, the detection waveband of the area array detector 140 may include 850 nm, 905 nm, 940 nm, 1550 nm, or another infrared waveband matched with the area array light source 110.

In an embodiment, the emitting lens group 120 may be a refractor, a reflector, or a combination thereof, including a refractive/diffractive reflective optical system of a diffractive optical element. Similarly, the receiving lens group 130 may include a refractor, a reflector, or a combination thereof, including a refractive/diffractive reflective optical system of a diffractive optical element.

In an embodiment in which the area array light source 110 is an infrared light source array and the area array detector 140 is an infrared detector array, an infrared antireflective film may be arranged on each of the front surface and the rear surface of the refractor in the emitting lens group 120 or the receiving lens group 130, to improve the transmissivity for the infrared waveband. In addition, an infrared high-reflective film may be arranged on the front surface of the reflector in the emitting lens group 120 or the receiving lens group 130, to improve the reflectivity for the infrared waveband. Moreover, the receiving lens group 130 may further include an infrared filter, for example, a bandpass filter made of glass materials such as ZnSe, CaF2, quartz, and the like, so as to filter out an interference beam in a laser beam returned to the area array detector 140.

In an embodiment, a lens, a reflector, or a diffractive light source element in the emitting lens group 120 or the receiving lens group 130 may be made of infrared glass materials, such that the emitting lens group 120 or the receiving lens group 130 has high temperature resistance.

The area array light source 110 may use a vertical cavity surface emitting laser array, an edge emitting laser array, a solid-state laser array, a semiconductor laser array, or any laser array that can emit light applicable to the Lidar apparatus 100, or a combination of these laser arrays.

The area array detector 140 may use a single photon avalanche photodiode array, a silicon photomultiplier array, or any detector array that can emit light applicable to the Lidar apparatus 100, or a combination of these detector arrays.

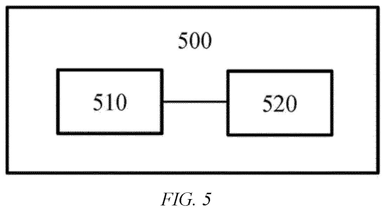

FIG. 5 is a schematic block diagram of a Lidar device 500 according to an embodiment of the disclosure. The Lidar device 500 includes a Lidar apparatus 510 and a computing apparatus 520.

The Lidar apparatus 510 may be any appropriate Lidar apparatus according to an embodiment of the disclosure, for example, the Lidar apparatus 500 described in detail above.

Similar to the above, the Lidar apparatus 510 includes an area array light source, an emitting lens group, a receiving lens group, and an area array detector. The area array light source is located in the front focal plane of the emitting lens group, and the area array detector is located in the back focal plane of the receiving lens group. A laser beam emitted from the area array light source is transmitted, through the emitting lens group, to an object to be detected, the laser beam is reflected by the surface of the object to be detected, and a reflected laser beam is transmitted to the area array detector through the receiving lens group so as to be detected by the area array detector. An array light source is used, so that the Lidar apparatus can implement long-range detection by increasing the laser power. A foveated optical system is used for each of the emitting lens group and the receiving lens group. The image height of the foveated optical system is directly proportional to a tangent value of a field of view, so that angular resolutions of the Lidar apparatus can be unevenly distributed within a full field-of-view range.

Similar to the above, in the Lidar apparatus 510, an operating waveband of the area array light source and a detection waveband of the area array detector are matched with each other, such that the laser beam emitted from the area array light source can be detected by the area array detector. For example, the area array light source may be an infrared light source array, and the area array detector may be an infrared detector array.

The computing apparatus 520 is configured to calculate, based on a difference between a time at which the area array light source emits the laser beam and a time at which the area array detector receives the laser beam, a distance between the Lidar apparatus and the object to be detected. For example, the computing apparatus 520 may receive, from the area array light source of the Lidar apparatus 510, a time ti at which a laser beam is emitted from the area array light source, may also receive, from the area array detector of the Lidar apparatus 510, a time t₂ at which the laser beam returns to the area array detector, and then calculate a time of flight of the laser beam based on a difference between ti and t₂, thereby calculating a distance between the Lidar apparatus 410 and the object to be detected.

A computing method in the computing apparatus 520 may be implemented by using a computer program. For example, when a computer storage medium (for example, a USB flash disk) storing the computer program is connected to a computer, the computer program is run to perform the above computing method in the computing apparatus 520.

The computing apparatus 520 may be any suitable dedicated or general-purpose processor such as a field-programmable gate array (FPGA), an application-specific integrated circuit (ASIC), or a digital signal processing (DSP) circuit.

In an embodiment, light sources at different positions in the area array light source may be lit up separately at different moments. This may be implemented by controlling a drive circuit of the area array light source in a time interlaced lighting manner. In addition, the area array detector may also work in a time interlaced lighting manner, so that the area array detector is lit up in a one-to-one correspondence with light sources at different positions in the area array light source. This may be implemented by using a time-to-digital conversion (TDC) circuit or a field programmable gate array (FPGA), which may be provided in the area array detector or outside the area array detector, which is not limited in the disclosure.

It should be noted that the area array light source and the area array detector need to cooperate with each other during time interlaced lighting. In the context of the disclosure, the area array light source and the area array detector cooperating with each other during time interlaced lighting means that when some light sources in the area array light source that are obtained after being emitted by an object to be detected return to the area array detector, a corresponding part of the area array detector is also enabled.

Those skilled in the art easily understand that some of the block diagrams shown in the accompanying drawings of the disclosure are functional entities and do not necessarily correspond to physically or logically independent entities. These functional entities may be implemented in the form of software, in one or more hardware modules or integrated circuits, or in different networks and/or processor apparatuses and/or micro-controller apparatuses.

Those skilled in the art easily understand that in some alternative embodiments, the functions/steps mentioned above may occur out of the illustrated order. For example, two functions/steps shown in sequence may be executed substantially simultaneously or even in a reverse order. This specifically depends on the functions/steps involved.

Those skilled in the art easily understand that the Lidar apparatus according to the embodiment of the disclosure may be integrated into an advanced driver assistance system (ADAS) of a vehicle.

Those skilled in the art easily understand that the Lidar apparatus according to the embodiment of the disclosure may be integrated into a vehicle. For example, the Lidar apparatus may be used as a sensor at any appropriate position of the vehicle, such as a front-view sensor or a rear-view sensor, so as to implement detection with a large field of view and uneven angular resolutions for an environment of the vehicle, and to be applicable to a driving cycle in which the vehicle needs to be more focused on an obstacle in front of the Lidar apparatus.

Those skilled in the art easily understand that the Lidar device according to the embodiment of the disclosure may be integrated into a vehicle. Similar to the above, the Lidar apparatus in the Lidar device may be used as a sensor at any appropriate position of the vehicle, such as a front-view sensor or a rear-view sensor, so as to implement detection with a large field of view and uneven angular resolutions for an environment of the vehicle. In addition, the computing apparatus in the Lidar device may be a separate device configured to calculate a distance between an object to be detected and the Lidar apparatus, or may be integrated into another processing device such as an electronic control unit (ECU) or a domain control unit (DCU).

As described above, the Lidar apparatus according to the disclosure can provide a long-range solid-state Lidar detection solution with a large field of view and uneven angular resolutions for the vehicle. The Lidar apparatus has less components and parts and a simple structure, and an assembly process of the Lidar apparatus is mainly focused on the assembly and adjustment of the emitting lens group and the area array light source, the assembly and adjustment of the receiving lens group and the area array detector, and the assembly of the receiving lens group and the emitting lens group as well as the adjustment of optical axes of the receiving lens group and the emitting lens group. Therefore, the assembly difficulty is low.

The Lidar apparatus according to the embodiment of the disclosure can detect an object at a longer distance by using an array light source by increasing the laser power, can implement sensing within a large field-of-view range through the design of the emitting lens group and the receiving lens group, and can provide environmental perception data with a wider range and higher accuracy for driving.

The Lidar apparatus according to the embodiment of the disclosure can implement uneven distribution of laser-point cloud in the detection plane by using the foveated optical system, and has higher detection precision at positions near the directly front direction. For example, for a vehicle traveling at a high speed, obstacles directly in front of the vehicle are more likely to affect the driving safety than those on both sides of the vehicle. In this case, the vehicle that is mounted with the Lidar apparatus according to the embodiment of the disclosure and uses the Lidar apparatus as a front-view sensor can be more focused on obstacles at positions near the directly front direction, has higher detection precision for the obstacles in the direction, and use a detection result to prompt the driver or a processor in the vehicle that is used for an advanced driver assistance system (ADAS), to provide the driver or processor with more time for response and decision-making.

In addition, all the components and parts (the area array light source, the emitting lens group, the receiving lens group, the area array detector, and the like) in the Lidar apparatus according to the embodiment of the disclosure are all-solid-state devices, and therefore it is easy for them to pass automotive-grade tests. In addition, as described above, the Lidar apparatus according to the embodiment of the disclosure is less difficult to assemble, the assembly process is mature, and therefore, it is easier for the Lidar apparatus to pass automotive-grade tests.

Although only some implementations of the disclosure are described, those of ordinary skill in the art should understand that the disclosure may be implemented in multiple other forms without departing from the essence and scope of the disclosure. Accordingly, the presented examples and implementations are considered to be illustrative rather than restrictive, and the disclosure may encompass various modifications and replacements without departing from the spirit and scope of the disclosure that are defined by the appended claims.

## Claims

1. A Lidar apparatus, comprising: an area array light source, an emitting lens group, a receiving lens group, and an area array detector, wherein
the area array light source is located in the front focal plane of the emitting lens group, and the area array detector is located in the back focal plane of the receiving lens group;
a laser beam emitted from the area array light source is transmitted, through the emitting lens group, to an object to be detected and reflected by the object to be detected, and a reflected laser beam is transmitted to the area array detector through the receiving lens group;
a foveated optical system is used for each of the emitting lens group and the receiving lens group; and
the image height of the foveated optical system is directly proportional to a tangent value of a field of view.

2. The Lidar apparatus according to claim 1, wherein
an optical axis of the emitting lens group is parallel to an optical axis of the receiving lens group.

3. The Lidar apparatus according to claim 1 or 2, wherein the area array light source comprises one or more of the following laser arrays: a vertical cavity surface emitting laser array, an edge emitting laser array, a solid-state laser array, and a semiconductor laser array.

4. The Lidar apparatus according to any one of claims 1 to 3, wherein
an operating waveband of the area array light source and a detection waveband of the area array detector are matched with each other.

5. The Lidar apparatus according to claim 4, wherein
the area array light source is an infrared light source array; and
the area array detector is an infrared detector array.

6. The Lidar apparatus according to any one of claims 1 to 5, wherein
the area array light source and the area array detector cooperate with each other in a time interlaced lighting mode.

7. The Lidar apparatus according to any one of claims 1 to 6, wherein
the emitting lens group comprises a refractor, a reflector, or a combination thereof; and/or
the receiving lens group includes a refractor, a reflector, or a combination thereof.

8. The Lidar apparatus according to claim 7, wherein
an infrared antireflective film is arranged on the front surface and/or the rear surface of the refractor; and/or
an infrared high-reflective film is arranged on the front surface of the reflector.

9. A Lidar device, comprising:
the Lidar apparatus according to any one of claims 1 to 8; and
a computing apparatus configured to calculate, based on a difference between a time at which the area array light source emits the laser beam and a time at which the area array detector receives the laser beam, a distance between the Lidar apparatus and the object to be detected.

10. A vehicle, comprising the Lidar apparatus according to any one of claims 1 to 8.
